# EUROPÄISCHE PATENTSCHRIFT

(11) **EP 3 022 095 B1**
(45) Veröffentlichungstag und Bekanntmachung des Hinweises auf die Patenterteilung: **23.09.2020**
(21) Anmeldenummer: 13791994.0
(22) Anmeldetag: 14.11.2013
(51) Int. Cl.: B60S 1/34, B60S 1/38

(54) **SCHEIBENWISCHVORRICHTUNG FÜR EIN FAHRZEUG**
WINDCREEN WIPER DEVICE FOR A VEHICLE
DISPOSITIF D'ESSUIE-GLACE DESTINÉ À UN VÉHICULE

(30) Priorität: 17.07.2013 DE 102013214064
(43) Veröffentlichungstag der Anmeldung: 25.05.2016
(73) Patentinhaber: Robert Bosch GmbH, 70442 Stuttgart (DE)
(72) Erfinder: HACKL, Viktor, H-9400 Sopron (HU); HAUSER, Florian, 77855 Achern (DE); DEAK, Peter, H-1188 Budapest (HU); WEILER, Michael, 77815 Buehl (DE)
(86) Internationale Anmeldenummer: PCT/EP2013/073821
(87) Internationale Veröffentlichungsnummer: WO 2015/007350

(56) Entgegenhaltungen:
- EP-A1- 2 917 076
- EP-A2- 0 930 207
- DE-A1- 1 918 917
- FR-A- 1 388 148
- GB-A- 1 425 568
- JP-U- H0 542 020
- US-A- 2 918 688
- US-A- 3 131 414
- US-A- 4 592 110

## Beschreibung

Die Erfindung betrifft eine Scheibenwischvorrichtung für ein Fahrzeug, insbesondere ein Kraftfahrzeug, weiterhin insbesondere ein Wischblatt.

### Stand der Technik

Scheibenwischvorrichtungen haben typischerweise einen Wischarm oder Wischhebel, wobei ein Wischblatt auf der Scheibe eines Kraftfahrzeugs o.ä. bewegt wird. Dabei wird das Wischblatt zwischen einer oberen Wendelage und einer unteren bewegt. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es eine Bedürfnis, Scheibenwischvorrichtungen weiter zu verbessern.

Bei der Verbesserung gibt es eine Mehrzahl von Randbedingungen, die zusätzlich berücksichtigt werden sollten. Zu diesen gehören der Aufwand bei der Herstellung bzw. die Herstellungskosten, die Materialkosten, aber auch die Eigenschaften der Scheibenwischvorrichtung, insbesondere die Funktion unter vielfältigen Bedingungen sowie die Langlebigkeit unter einer Vielzahl von Bedingungen. Es gilt bei Wischvorrichtungen für Fahrzeuge dabei zu berücksichtigen, dass der Kostendruck stetig steigt und dass die Fahrzeuge in einer Vielzahl von klimatischen Bedingungen zum Einsatz kommen können, so dass z.B. extreme Temperaturwerte dauerhaft und/oder mit großen Schwankungen auftreten.

Aus der GB 1425568 ist eine Scheibenwischvorrichtung bekannt, die ein lang gestrecktes Oberteil sowie ein langgestrecktes Unterteil aufweist, die mittels Blattfedern miteinander verbunden sind.

Weiterhin ist aus der US 4,592,110 eine Scheibenwischvorrichtung bekannt, die ein langgestrecktes Oberteil und ein langgestrecktes Unterteil aufweist. Hierbei sind Blattfedern zwischen Ober- und Unterteil angeordnet, wobei die Blattfeder am Unterteil starr und am Oberteil entlang der Längserstreckung verschieblich ausgebildet ist.

Aus der nicht vorveröffentlichten EP 2 917 076 A2 ist darüber hinaus eine Scheibenwischvorrichtung nach dem Flossenstrahl-Prinzip bekannt.

### Offenbarung der Erfindung

Es ist die Aufgabe der vorliegenden Erfindung, ein zuverlässiges, weitgehend schlierenfreies Wischen einer Scheibe eines Fahrzeugs zu gewährleisten.

Diese Aufgabe wird gelöst durch eine Scheibenwischvorrichtung mit den Merkmalen gemäß Anspruch 1.

Gemäß einer Ausführungsform der vorliegenden Erfindung wird eine Scheibenwischvorrichtung nach dem Flossenstrahl-Prinzip für ein Fahrzeug, insbesondere ein Kraftfahrzeug, vorgeschlagen. Die Scheibenwischvorrichtung weist ein Oberteil, insbesondere ein langgestrecktes Oberteil auf, das zumindest teilweise biegbar ausgestaltet ist. Ferner ist ein Unterteil, insbesondere ein langgestrecktes Unterteil, vorhanden, das zumindest teilweise biegbar ausgestaltet ist. Mehrere Verbindungselemente zum Verbinden des Oberteils und des Unterteils sind entlang einer Längserstreckung der Scheibenwischvorrichtung voneinander beabstandet und mittels Drehgelenken an dem Unterteil befestigt Die Drehgelenke sind Filmscharniere, die eine Dicke von 0,1 mm bis0,8 mm, insbesondere 0,2 bis 0,4 mm haben.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Die vorliegende Erfindung und ihre Ausführungsformen ermöglichen vorteilhafterweise eine besonders gute Anpassung der Scheibenwischvorrichtung an die Krümmung einer Scheibe. Dies gewährleistet ein besonders gutes und exaktes Wischen der Scheibe. Nicht gewischte Bereiche der Scheibe und eine Schleierbildung auf der Scheibe können weitgehend vermieden werden. Die konstruktive Ausgestaltung der erfindungsgemäßen Scheibenwischvorrichtung ermöglicht vorteilhafterweise ein genaues Anpassen der Scheibenwischvorrichtung an innerhalb der Scheibe auftretende Krümmungsänderungen. Ein weitgehend gleichmäßiger Kontaktdruck auf die Scheibenwischvorrichtung, insbesondere auf ihr Unterteil, wird auch bei starken Krümmungen und Krümmungsänderungen der Scheibe erreicht. Gegenüber herkömmlichen Scheibenwischvorrichtungen ist es bei der erfindungsgemäßen Scheibenwischvorrichtung vorteilhafterweise nicht erforderlich, eine vorhergehende Einstellung des Oberteils und/oder des Unterteils an die Krümmung der zu wischenden Scheibe vorzunehmen. Die Anpassung an die Krümmung der Scheibe erfolgt bei der erfindungsgemäßen Scheibenwischvorrichtung schnell, unkompliziert und weitgehend selbstständig. Ein und dieselbe Scheibenwischvorrichtung ist daher einfachheitshalber für eine große Anzahl von Fahrzeugen einsetzbar.

Vorteilhafterweise ist die Scheibenwischvorrichtung so ausgestaltet, dass zwischen den Verbindungselementen und dem Unterteil Torsionsbewegungen möglich sind.

Dies gewährleistet eine hohe Flexibilität und Anpassungsfähigkeit des Unterteils. Des Weiteren sind die Verbindungselemente in einer vorteilhaften Ausgestaltung der Erfindung mittels Drehgelenken ebenfalls an dem Oberteil befestigt. Dies gewährleistet eine noch bessere Anpassungsfähigkeit der Scheibenwischvorrichtung an die zu wischende Scheibe, wobei insbesondere ein hoher Anpressdruck auf die Scheibe, und damit eine besonders gute Reinigungs- und Wischwirkung, erzielbar ist. Besonders vorteilhaft ist die Scheibenwischvorrichtung so ausgestaltet, dass zwischen den Verbindungselementen und dem Oberteil ebenfalls Torsionsbewegungen möglich sind. Vorteilhafterweise sind die Drehgelenke Scharniere. Die erfindungsgemäße Scheibenwischvorrichtung ist insbesondere so ausgestaltet, dass Oberteil und Unterteil balkenförmig ausgestaltet sind. Des Weiteren ist es vorteilhafterweise möglich, dass Oberteil und Unterteil zumindest teilweise biegeelastisch sind. Gemäß einer Ausführungsform der Erfindung sind Ober- und Unterteil gegeneinander verschieblich. In einer weiteren Ausführungsform ist das Oberteil gegenüberliegend dem Unterteil angeordnet. Die Verbindungselemente sind an sich einander zugewandten Innenseiten des Ober- und -Unterteils befestigt. Besonders vorteilhaft sind die Verbindungselemente knicksteif ausgebildet.

Gemäß einer Ausführungsform der Erfindung sind das Oberteil und das Unterteil, insbesondere in einem Endbereich der Scheibenwischvorrichtung, an einer äußeren Verbindungsposition fest miteinander verbunden. Die äußere Verbindungsposition ist, insbesondere in eine in Längserstreckung der Scheibenwischvorrichtung von außen nach innen weisende Richtung betrachtet, vor den Verbindungselementen ausgebildet. Diese Ausgestaltung gewährleistet vorteilhafterweise eine besonders gute Stabilität der Scheibenwischvorrichtung. Ferner kann eine besonders hohe Flexibilität und Fähigkeit zum Anpassen an die Scheibenkrümmung erreicht werden, wobei ein gleichmäßiger Anpressdruck des Unterteils auf die Scheibe gegeben ist. In einer weiteren vorteilhaften Ausgestaltung können das Ober- und das Unterteil an der äußeren Verbindungsposition so miteinander verbunden sein, dass Ober- und Unterteil einen Keil bilden. Ober- und Unterteil sind insbesondere an ihren Enden miteinander verbunden. Gemäß weiteren Ausgestaltungen können ein oder mehrere erste Verbindungselement und ein oder mehrere zweites Verbindungselemente wie folgt zur Verfügung gestellt sein. Ein erstes Verbindungselement ist im Vergleich zu einem zweiten Verbindungselement derart angeordnet, dass das erste Verbindungselement relativ zum zweiten Verbindungsteil in Richtung der Verbindungsposition des Oberteils und des Unterteils liegt, d.h. in Richtung der Spitze des Keils bzw. außen liegt. Hierbei ist das erste Verbindungselement kürzer als das zweite Verbindungselement. Beispielsweise können zumindest 70 % oder zumindest 50% der Verbindungselemente derart ausgestaltet sein, dass sie nach außen, d.h. in Richtung der Verbindungsposition des Oberteils und des Unterteils, kürzer werden.

Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

Gemäß einer weiteren Ausführungsform verlaufen die Längsachsen der Verbindungselemente in Winkeln zum Unterteil, die zwischen 65° und 115°, insbesondere zwischen 75° und 105°, liegen. Dies gewährleistet vorteilhafterweise eine besonders gute Übertragung einer auf das Unterteil wirkenden Kraft auf das Oberteil. Ferner kann auf diese Weise eine besonders stabile Scheibenwischvorrichtung erreicht werden. Besonders vorteilhaft liegen die Winkel zwischen 80° und 100°.

Gemäß einer weiteren Ausführungsform ist der Abstand zwischen jeweils zwei benachbarten Verbindungselementen kleiner als 50 mm, insbesondere kleiner als 30 mm. Dadurch ist eine besonders hohe Flexibilität der Scheibenwischvorrichtung, insbesondere ihres Unterteils, und gute Anpassung an die Krümmung und Krümmungsänderungen der zu wischenden Scheibe gewährleistet.

Gemäß einer weiteren typischen Ausführungsform ist das Oberteil ein- oder zweiteilig ausgebildet. Dadurch kann eine hohe Stabilität der Scheibenwischvorrichtung erreicht werden.

Gemäß einer weiteren vorteilhaften Ausführungsform ist eine biegbare Scheibenwischerlippe an einer Seite des Unterteils angebracht, die dem Oberteil abgewandt ist. Dadurch ist vorteilhafterweise eine besonders hohe Funktionalität der Scheibenwischvorrichtung gegeben.

Gemäß einer weiteren Ausführungsform ist das Unterteil mit einer Zugerzeugungseinrichtung zum Erzeugen einer auf das Unterteil, insbesondere in Richtung der Längserstreckung des Unterteils, wirkenden Zugkraft verbunden. Durch diese Ausgestaltung kann die Scheibenwischvorrichtung, insbesondere ihr Unterteil, besonders exakt an die Krümmung der Scheibe angelegt und angepasst werden. Die Zugkraft wird dabei insbesondere mittels der Verbindungselemente auf das Oberteil übertragen. Die Zugerzeugungseinrichtung kann beispielsweise mittels eines Aktuators zum Erzeugen von Längenkontraktionen realisiert sein. Dieser ist so angeordnet, dass die Längenkontraktionen auf das Unterteil wirken.

Gemäß einer weiteren Ausführungsform ist das Oberteil mit einer Druckerzeugungseinrichtung zum Erzeugen einer auf das Oberteil, insbesondere in Richtung der Längserstreckung des Oberteils, wirkenden Druckkraft verbunden. Dies ermöglicht ebenfalls ein besonders exaktes Anlegen und Anpassen der Scheibenwischvorrichtung an die Krümmung der Scheibe. Die Druckkraft wird dabei insbesondere mittels der Verbindungselemente auf das Unterteil übertragen. Die Druckerzeugungseinrichtung kann beispielsweise mittels eines Aktuators zum Erzeugen von Längenextraktionen realisiert sein, der so angeordnet ist, dass die Längenextraktionen auf das Oberteil wirken.

Gemäß einer weiteren Ausführungsform sind mehrere Aktuatoren zum Erzeugen von Längenkontraktionen und Längenextraktionen vorhanden, die in dem Unterteil entlang dessen Längserstreckung angeordnet sind. Dies ermöglicht ein besonders genaues Anlegen des Unterteils gerade an Scheiben, die eine schwierige Krümmung aufweisen, d. h. insbesondere Scheiben mit konvexen und konkaven Krümmungsbestandteilen. Vorteilhafterweise sind die Aktuatoren so ausgestaltet, dass sie in einem Bereich der Scheibe mit einer konvexen Krümmung kontrahieren und in einem Bereich der Scheibe mit einer konkaven Krümmung extrahieren. Die Aktuatoren können insbesondere von einem Steuermittel mittels geeigneter elektrischer Signale angesteuert werden. Dazu ist es vorteilhafterweise möglich, die zu wischende Scheibe vorab zu vermessen, um konvexe und konkave Krümmungsstellen festzustellen. Ein Modell der vermessenen Scheibe kann dann in dem Steuermittel hinterlegt sein. Alternativ oder zusätzlich ist es möglich, einen oder mehrere Sensoren vorzusehen, mit denen sich die Krümmung der Scheibe feststellen lässt. Die von den Sensoren gelieferten Informationen können für geeignete Ansteuersignale für die Aktuatoren eingesetzt werden.

Gemäß einer weiteren Ausführungsform ist zwischen dem Oberteil und dem Unterteil ein Zwischenraum ausgebildet, in dem ein Spoiler zum Beeinflussen einer in den Zwischenraum eindringenden Luftströmung angeordnet ist. Dadurch kann das genaue Wischen der Scheibe vorteilhafterweise weiter verbessert werden. Beispielsweise kann der Spoiler so ausgestaltet sein, dass gerade bei hohen Fahrgeschwindigkeiten des Fahrzeugs eine Kompensation einer Windauftriebskraft erfolgt, die ansonsten den Anpressdruck der Scheibenwischvorrichtung auf die Scheibe verringert. Der Spoiler kann ferner so ausgestaltet sein, dass ein Windauftrieb genutzt wird, um die Scheibenwischvorrichtung nach unten in Richtung der Scheibe zu drücken. Der Anpressdruck der Scheibenwischvorrichtung wird erhöht und ihr besonders genaues Anlegen auf die Krümmung der Scheibe gewährleistet.

Gemäß einer weiteren Ausführungsform ist zumindest ein biegbar ausgestalteter Teil des Unterteils mittels eines Materials gebildet, das einen Elastizitätsmodul hat, der in einem Bereich zwischen 0,005 kN/mm2 und 0,5 kN/mm2, insbesondere 0,01 kN/mm2 und 0,1 kN/mm2, liegt. Dadurch kann ein besonders biegefähiges und flexibles Unterteil erreicht werden.

Gemäß einer weiteren Ausführungsform ist die erfindungsgemäße Scheibenwischvorrichtung so ausgestaltet, dass sie nach einem sogenannten Flossenstrahl-Prinzip aufgebaut ist. Dieses Flossenstrahl-Prinzip ist aus dem Aufbau von Flossen von bestimmten Fischen abgeleitet. Gemäß dem Flossenstrahl-Prinzip weicht das Unterteil der Scheibenwischvorrichtung, und vorteilhafterweise auch deren Oberteil, bei Auftreten einer Druckkraft auf das Unterteil nicht in Richtung der Druckkraft aus, sondern wölbt sich in die entgegengesetzte Richtung, d. h. in die Richtung, aus der die Druckkraft kommt.

Gemäß weiteren typischen Ausführungsformen sind das Oberteil und das Unterteil mit Drehgelenken bzw. weiteren Drehgelenken an den Verbindungselementen verbunden. Die Drehgelenke am Oberteil und Unterteil ermöglichen eine Bewegung nach dem Fin-Ray-Prinzip und dienen somit der besonders guten Anpassung der Scheibenwischvorrichtung bzw. eine Wischlippe an die Scheibe.

Gemäß einer weiteren typischen Ausführungsform können die Drehgelenke und/oder die weiteren Drehgelenke zum Oberteil eine erstes Gelenkteil und ein zweites Gelenkteil beinhalten. Zum Beispiel kann das erste Gelenkteil zylinderförmig oder kugelförmig sein und das zweite Gelenkteil einen Hinterschnitt zur Aufnahme des ersten Gelenkteils umfassen. Die zweiteilieg Ausgestaltung der Drehgelenke bietet eine Vielzahl von Möglichkeiten Gelenkeigenschaften wie das Kriechverhalten günstig zu beeinflussen. Materialien könne derart gewählt werden, um auch bei hohen Temperaturschwankungen und/oder bei andauernd hohen Umgebungstemperaturen ein zuverlässige bzw. langlebige Gelenkeigenschaften zu ermöglichen.

Erfindungsgemäß sind die Drehgelenke Filmscharniere Zum Beispiel können die Filmscharniere einteilig mit dem Verbindungselement und/oder dem Unterteil ausgebildet sind. Insbesondere können die Verbindungselement, das Oberteil und das Unterteil, sowie die Drehgelenke einteilig ausgestaltet sein. Die Ausgestaltung der Drehgelenke als Filmscharniere erlaubt eine einfache und kostengünstige Herstellung. Bei entsprechender Ausgestaltung können die Wischblätter bzw. die Scheibenwischvorrichtungen werkzeugfallend oder in weiten Bereichen werkzeugfallen zur Verfügung gestellt werden.

Erfindungsgemäß haben die Filmscharniere eine Dicke von 0,1 mm bis 0,8 mm, insbesondere 0,2 bis 0,4 mm Die Dicke der Filmscharniere erlaubt für eine Biegesteifigkeit bei einem vorbestimmten Wert oder darunter und ermöglicht darüber hinaus eine Herstellung im Spritzgussverfahren bei entsprechenden Eigenschaften des Wischblatts, z.B. einer ausreichenden Kriechbeständigkeit der Drehgelenke.

Gemäß einer weiteren typischen Ausführungsform können die Filmscharnier aus einem Material aus der Gruppe bestehend aus: POM, PA, und TPE, sein. Die Materialwahl der Filmscharniere, insbesondere in Verbindung mit der Dicke der Scharniere, erlaubt für eine Biegesteifigkeit bei einem vorbestimmten Wert oder darunter und ermöglicht darüber hinaus eine Herstellung im Spritzgussverfahren bei entsprechenden Eigenschaften des Wischblatts, z.B. einer ausreichenden Kriechbeständigkeit der Drehgelenke.

Gemäß einer weiteren typischen Ausführungsform können das erste und das zweite Gelenkteil aneinander geklipst werden oder das erste und das zweite Gelenkteil durch ein 2-Komponenten Spritzverfahren hergestellt sein. Geklipste Drehgelenke bieten eine Vielzahl von Möglichkeiten die Gelenkeigenschaften, zum Beispiel die Biegesteifigkeit und/oder das Kriechverhalten günstig zu beeinflussen. Materialien könne derart gewählt werden, um auch bei hohen Temperaturschwankungen und/oder bei andauernd hohen Umgebungstemperaturen ein zuverlässige bzw. langlebige Gelenkeigenschaften zu ermöglichen. Ferner können zuverlässige Wischvorrichtungen auch für komplexere Anwendungsfelder zur Verfügung gestellt werden. 2-Komponenten Spritzverfahren erlauben ebenfalls Gelenkvarianten für komplexere Anwendungsfelder zur Verfügung zu stellen. Der Vorteil bei der Herstellung durch ein werkzeugfallendes Werkstück mit zweiteiligen Gelenken steht jedoch den Einschränkungen bei der Wahl der Materialien zur Herstellung eines 2-K-gespritzen Kugel- bzw. Zylindergelenks gegenüber.

Gemäß einer weiteren typischen Ausführungsform kann die Scheibenwischvorrichtung weiterhin eine am Unterteil zur Verfügung gestellte Wischlippe enthalten, wobei die Wischlippe und das Drehgelenk derart zur Verfügung gestellte sind, dass sie zumindest teilweise dasselbe Material umfassen. Somit können für das Drehgelenk und die Wischlippe, die beide erhöhte Anforderungen an die Materialwahl (Elastizität, Biegesteifigkeit, Kriechbeständigkeit) haben, hochwertigere Materialien verwendete werden. Da andere Teile der Wischvorrichtung auch mit anderen Materialien zur Verfügung gestellt werden, sind die Herstellungskosten dennoch begrenzt. Ferner kann die Scheibenwischvorrichtung in einem 2-Komponenten Verfahren hergestellt werden.

### Kurze Beschreibung der Zeichnungen

Ausführungsbeispiele der Erfindung sind in den Figuren dargestellt und werden im Folgenden näher beschrieben. Es zeigen:
Figur 1A eine schematische Darstellung eines Ausführungsbeispiels einer erfindungsgemäßen Scheibenwischvorrichtung in Form eines Wischblatts in einer Grundstellung,
Figur 1B eine schematische Darstellung des Wischblatts nach Fig. 1A in einer an eine Scheibe angelegten Stellung,
Figur 2A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 2B eine schematische Darstellung des Wischerarms mit integriertem Wischblatt nach Fig. 2A in einer an eine Scheibe angelegten Stellung,
Figur 3A eine schematische Darstellung eines Ausschnitts des Wischblatts nach Fig. 2A,
Figur 3B eine schematische Darstellung eines Ausschnitts des Wischblatts nach Fig. 2B,
Figur 4A eine schematische Darstellung eines weiteren Ausführungsbeispiels einer erfindungsgemäßen Scheibenwischvorrichtung in einer Grundstellung mit einem Aktuator als Zugerzeugungseinrichtung,
Figur 4B eine schematische Darstellung der Scheibenwischvorrichtung nach Fig. 4A in einer an eine Scheibe angelegten Stellung,
Figur 5A eine schematische Darstellung eines Ausführungsbeispiels einer erfindungsgemäßen Scheibenwischvorrichtung in einer Grundstellung mit einem Aktuator als Druckerzeugungseinrichtung,
Figur 5B eine schematische Darstellung der Scheibenwischvorrichtung nach Fig. 5A in einer an eine Scheibe angelegten Stellung,
Figur 6A eine schematische Darstellung eines weiteren Ausführungsbeispiels einer erfindungsgemäßen Scheibenwischvorrichtung in einer Grundstellung mit einem Aktuator als Zugerzeugungseinrichtung und einem weiteren Aktuator als Druckerzeugungseinrichtung,
Figur 6B eine schematische Darstellung der Scheibenwischvorrichtung nach Fig. 6A in einer an eine Scheibe angelegten Stellung,
Figur 7A eine schematische Darstellung eines Ausführungsbeispiels einer erfindungsgemäßen Scheibenwischvorrichtung in einer Grundstellung mit mehreren Aktuatoren als Zug- und Druckerzeugungseinrichtungen,
Figur 7B eine schematische Darstellung der Scheibenwischvorrichtung nach Fig. 7A in einer an eine Scheibe angelegten Stellung,
Figur 8A eine schematische Darstellung eines weiteren Ausführungsbeispiels einer erfindungsgemäßen Scheibenwischvorrichtung mit einem integrierten Spoiler
Figur 8B eine schematische Darstellung eines Querschnitts durch die Scheibenwischvorrichtung nach Fig. 8A,
Figur 9 einen Ausschnitt einer schematische Darstellung eines Ausführungsbeispiels einer erfindungsgemäßen Scheibenwischvorrichtung in Form eines Wischblatts,
Figuren 10A bis 10D zeigen schematische Darstellungen eines Drehgelenks gemäß Ausführungsbeispielen einer Scheibenwischvorrichtung in Form eines Wischblatts, wobei ein erstes Gelenkteil und ein zweites Gelenkteil zur Ausgestaltung des Gelenks verwendet werden,
Figur 11 zeigt eine schematische Darstellung eines Drehgelenks gemäß Ausführungsbeispielen einer Scheibenwischvorrichtung in Form eines Wischblatts, wobei ein erstes Gelenkteil und ein zweites Gelenkteil zur Ausgestaltung des Gelenks verwendet werden, die in einem 2-K- Spritzverfahren hergestellt sind,
Figur 12 zeigt eine schematische Darstellung eines Drehgelenks gemäß Ausführungsbeispielen einer erfindungsgemäßen Scheibenwischvorrichtung in Form eines Wischblatts, wobei ein Filmscharnier verwendet wird,
Figur 13 zeigt eine schematische Darstellung eines Drehgelenks gemäß Ausführungsbeispielen einer erfindungsgemäßen Scheibenwischvorrichtung in Form eines Wischblatts, wobei ein Drehgelenk und eine Wischlippe dasselbe Material umfassen, und
Figuren 14 und 15 Ablaufdiagramme zur Illustration von Ausführungsformen der Herstellung von Scheibenwischvorrichtungen.

### Ausführungsformen der Erfindung

Im Folgenden werden, sofern nicht anders vermerkt, für gleiche und gleichwirkende Elemente gleiche Bezugszeichen verwendet.

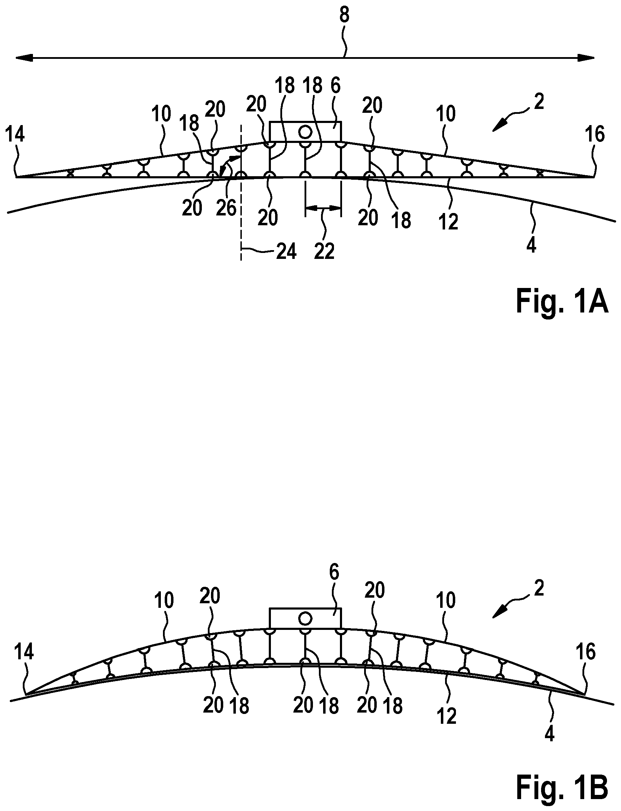

Figur 1 zeigt eine schematische Darstellung eines Ausführungsbeispiels einer erfindungsgemäßen Scheibenwischvorrichtung. Die Scheibenwischvorrichtung ist in diesem Ausführungsbeispiel ein Wischblatt 2. Das Wischblatt 2 dient zum Wischen einer Scheibe 4 eines Fahrzeugs, das zum Beispiel ein Kraftfahrzeug ist, insbesondere ein Auto. Üblicherweise ist das Wischblatt 2 an einem Scheibenwischerarm angebracht, der zum Wischen mittels eines Motors angetrieben wird. Dazu weist das Wischblatt 2 eine Halterung 6 auf, an der es an dem Scheibenwischerarm befestigt werden kann. Das Wischblatt 2 befindet sich in der Fig. 1 in einer Grundstellung, in der sie zumindest teilweise von der Scheibe 4 abgehoben ist. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein, die in FIG. 1 exemplarisch jeweils einteilig ausgebildet sind. Das ermöglicht eine besonders stabile Konstruktion. Es ist ebenso möglich, nur jeweils einen Teil des Oberteils 10 und/oder des Unterteils 12 biegbar auszugestalten. Ferner ist es alternativ möglich, das Oberteil 8 zweiteilig ausgestaltet, wobei dann jeweils ein Ende der beiden Teile des zweiteiligen Oberteils 8 an der Halterung 6 befestigt sind. Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm2 und 0,5 kN/mm2, insbesondere 0,01 kN/mm2 und 0,1 kN/mm2, liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit. Das Oberteil 10 und das Unterteil 12 sind so angeordnet, dass sie sich gegenüberliegen. Beide Enden des Oberteils 10 sind an äußeren Verbindungspositionen 14 und 16 mit jeweils einem Ende des Unterteils 12 fest verbunden. Ansonsten sind das Oberteil 10 und das Unterteil 12 voneinander beabstandet.

Das Oberteil 10 und das Unterteil 12 sind durch Verbindungselemente 18 miteinander verbunden. Insbesondere in der Grundstellung des Wischblatts 2, verlaufen diese in etwa quer zur Längserstreckung 8 des Wischblatts 2. Die Verbindungselemente 18 sind an einander zugewandten inneren Längsseiten des Oberteils 10 und des Unterteils 12 mittels Drehgelenken 20 befestigt. Die Drehgelenke 20 sind hier Scharniere. Insbesondere können die Drehgelenke 20 als Filmscharniere ausgebildet sein. Dies ist vor allem dann vorteilhaft, wenn Oberteil 10, Unterteil 12 und/oder Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Die Verbindungselemente 18 sind entlang der Längserstreckung des Wischblatts 2 voneinander beabstandet. Die Abstände zwischen jeweils zwei benachbarten Verbindungselementen 18 sind gleich. Sie können aber auch unterschiedlich gewählt werden. Die Abstände sind vorteilhafterweise kleiner als 50 mm, insbesondere kleiner als 30 mm. Im vorliegenden Ausführungsbeispiel ist stellvertretend für die Abstände zwischen jeweils zwei Verbindungselementen 18 ein Abstand 22 dargestellt. Die Verbindungselemente 18 sind, insbesondere in der Grundstellung des Wischblatts 2, so an dem Unterteil 12 befestigt, dass ihre Längsachsen in Winkeln 26 zum Unterteil 12 verlaufen, die zwischen 65° und 115°, insbesondere zwischen 75° und 105°, liegen. Besonders vorteilhaft liegen die Winkel zwischen 80° und 100°. Entsprechendes gilt im vorliegenden Ausführungsbeispiel für die Befestigungen der Verbindungselemente 18 an dem Oberteil 10. In der Fig. 1A ist beispielhaft für die Längsachsen der Verbindungselemente 18 eine Längsachse 24 und beispielhaft für die Winkel zwischen den Verbindungselementen 18 und dem Unterteil 12 ein Winkel 26 dargestellt. Die Abstände zwischen dem Oberteil 10 und dem Unterteil 12 werden vor allem durch die Längen der Verbindungselemente 18 bestimmt. Die Längen der Verbindungselemente 18 nehmen, ausgehend von den beiden äußeren Verbindungspositionen 14, 16 bis in etwa zu denjenigen Stellen, an denen die an das Oberteil 10 angebrachte Halterung 6 beginnt, zu. Dadurch bilden Oberteil 10 und Unterteil 12 in der Seitenansicht auf das Wischblatt 2 nach Fig. 1A einen Doppelkeil aus, wobei die Spitzen der beiden Keile in entgegengesetzte Richtungen weisen. Die Verbindungselemente sind knicksteif ausgeführt.

Fig. 1B zeigt eine schematische Darstellung des Wischblatts 2 nach Fig. 1A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an einem Verbindungspositionen 14 und/oder 16, die Form, und durch Drehgelenke an der Verbindung zwischen den Verbindungselementen und dem Ober- bzw. Unterteil gegeben.

In der Darstellung nach Fig. 1B ist zwischen dem Wischblatt 2 und der Scheibe 4 ein kleiner Abstand vorhanden, der hier nur der Verdeutlichung der Scheibe 4 und des Wischblatts 2 dient und der in Realität bei Anlegen des Wischblatts 2 an die Scheibe 4 weitgehend so nicht vorhanden ist. Des Weiteren befindet sich an der dem Oberteil 10 abgewandten Unterseite des Unterteils 12 bei den meisten Wischblättern eine Gummilippe, die aus Gründen der Übersichtlichkeit nicht dargestellt ist und die zum Wischen auf der Scheibe 4 aufsetzt.

Eine solche Scheibenwischvorrichtung, zum Beispiel ein Scheibenwischarm oder Scheibenwischarm mit Scheibenwischblatt, hat den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet.

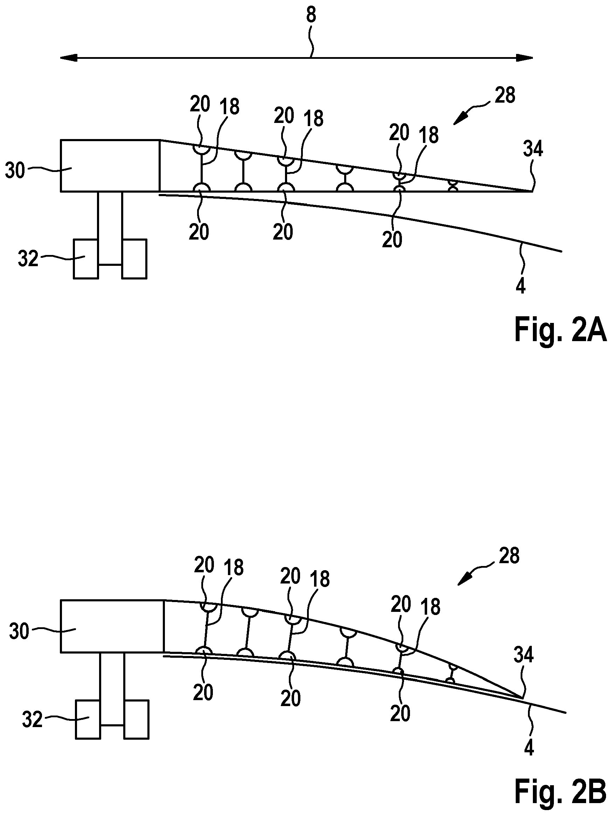

Figuren 1A und 1B zeigen ein Wischblatt 2 mit einer Längserstreckung 8, die sich im Wesentlichen zwischen den Verbindungspositionen 14 und 16 erstreckt. Eine solche Anordnung wird häufig für Frontscheibenwischer verwendet. Alternative kann ein Scheibenwischvorrichtung jedoch auch nur eine Verbindungsposition aufweisen, was in Analogie zu den Figuren 1A und 1B eine Halbierung der Scheibenwischvorrichtung entspricht, und wobei zum Beispiel an einer Position der Halterung 6 eine Drehachse vorgesehen. Eine solche Anordnung wird häufig für Heckscheibenwischer verwendet. Dies ist beispielhaft unter anderem in den Figuren 2A und 2B dargestellt. Optionale Ausgestaltungen und Details, wie Sie in den einzelnen Ausführungsformen beschrieben sind, können im Allgemeinen für beide Varianten einer Anordnung eine Scheibenwischvorrichtung verwendet werden.

Figur 2A zeigt eine schematische Darstellung eines weiteren Ausführungsbeispiels der erfindungsgemäßen Scheibenwischvorrichtung in der Grundstellung. Die Scheibenwischvorrichtung ist hier ein Wischerarm mit einem integrierten Wischblatt 28, das an einem Befestigungsteil 30 angebracht ist. Das Befestigungsteil 30 ist mit einem Wischermotor 32 verbunden, der das Befestigungsteil 30 zum Wischen der Scheibe 4 antreibt. Das Wischerblatt 28 ist keilförmig ausgestaltet, wobei ein Ende des Oberteils 10 an einer äußeren Verbindungsposition 34 mit einem Ende des Unterteils 12 fest verbunden ist. Das jeweils andere Ende des Oberteils 10 und des Unterteils 12 sind an dem Befestigungsteil 30 befestigt. Betreffend den grundlegenden Aufbau und insbesondere die Befestigungen der Verbindungselemente 18 entspricht die Scheibenwischvorrichtung nach Fig. 2A prinzipiell derjenigen nach Fig. 1A.

Fig. 2B zeigt eine schematische Darstellung des Wischblatts 28 mit integriertem Wischerarm 30 nach Fig. 2A in einer an die Scheibe 4 angelegten Stellung. Auch hier wirken von unten aus der Richtung der Scheibe 4 Druckkräfte auf das Unterteil 12 des Wischblatts 28, so dass sich das Unterteil 12 und das Oberteil 10 in Richtung der Scheibe 4 biegen.

Sowohl in FIG. 1A als auch in FIG. 2A ist das Wischblatt in seiner nicht an die Scheibe angelegten Stellung derart dargestellt, dass das Unterteil 12 im Wesentlich gerade ausgebildet ist. Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

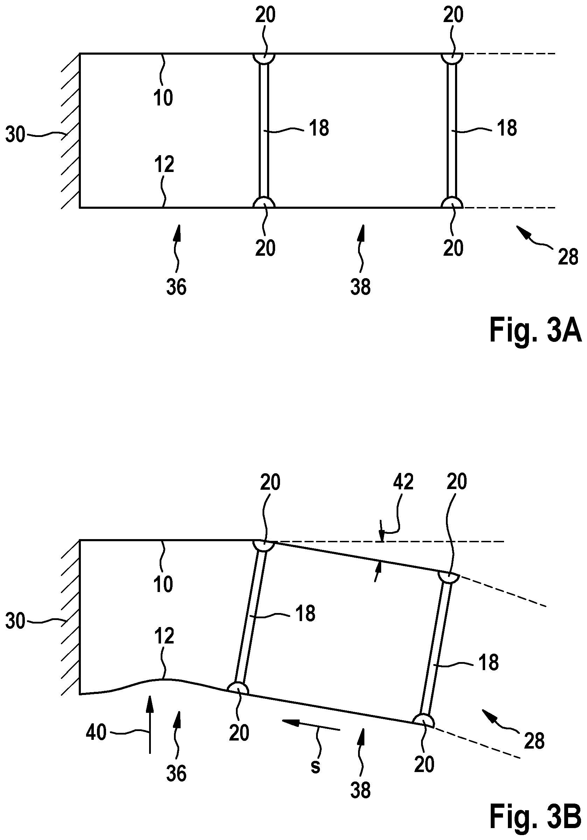

Fig. 3A zeigt eine schematische Darstellung eines Ausschnitts des Wischblatts 28 gemäß dem Ausführungsbeispiel nach Fig. 2A, in dem sich das Wischblatt 28 in der Grundstellung befindet. Dargestellt ist der linke Endbereich des Wischblatts 28, in dem ein Ende des Oberteils 10 und ein Ende des Unterteils 12 an dem Befestigungsteil 30 befestigt sind. Fig. 3A zeigt ausgehend von dem Übergang vom Befestigungsteil 30 zu dem Wischblatt 28 die ersten beiden Verbindungselemente 18, die zwei Wischblattelemente 36 und 38 begrenzen. Die Verbindungselemente 18 sind über Drehgelenke 20 an dem Oberteil 10 und dem Unterteil 12 befestigt.

Fig. 3B zeigt eine schematische Darstellung eines Ausschnitts des Wischblatts 28 gemäß dem Ausführungsbeispiel nach Fig. 2B, in dem das Wischblatt 28 an die Scheibe 4 angelegt ist. Es wirken von unten aus Richtung der Scheibe Druckkräfte auf das Unterteil 12. Stellvertretend für die Druckkräfte ist in der Fig. 3B eine Drucckraft 40 dargestellt. Die Druckkraft 40 bewirkt ein Wölben und Verbiegen des Unterteils 12 des Wischblattelements 36. Dadurch wird das Drehgelenk 20 des ersten Verbindungselements 18 um einen Weg s nach links verschoben. Das zweite Wischblattelement 38 biegt sich nach unten in die Richtung, aus der die Druckkraft 40 kommt, und schmiegt sich an die Scheibe an. Dabei entsteht zwischen dem ersten Wischblattelement 36 und dem zweiten Wischblattelement 38 ein Winkel 42. Ferner bildet sich eine weitere Druckkraft, die dann auf das Unterteil 12 des zweiten Wischblattelements 38 wirkt und ein weiteres Verbiegen des zweiten Wischblattelements 38 nach unten verhindert. Es entsteht eine Kettenreaktion zum rechten benachbarten Wischblattelement bis zum Ende des Wischblatts 28.

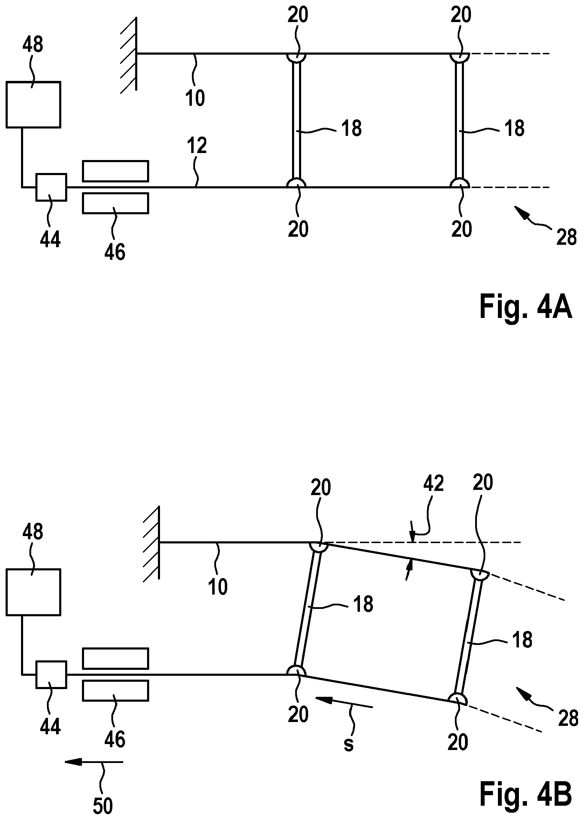

Fig. 4A eine schematische Darstellung eines weiteren Ausführungsbeispiels der Scheibenwischvorrichtung in einer Grundstellung mit einem Aktuator 44 als Zugerzeugungseinrichtung. Der Aktuator 44 ist mit dem linken Ende des Unterteils 12 verbunden, das in seinem Endbereich durch eine Führung 46 geführt ist. Der Aktuator 44 ist ein Piezo-Aktuator, der Längenkontraktionen ausführen kann. Dazu ist er mit einem Steuergerät 48 verbunden, das mittels geeigneter elektrischer Signal den Aktuator 44 ansteuert. Das Steuermittel 48 ist so ausgestaltet, dass es aufgrund der Krümmung der Scheibe die geeigneten Ansteuersignale für den Aktuator 44 bestimmt. Bei einer solchen Kontraktion wird auf das Unterteil 12 eine Zugkraft 50 in Längserstreckung 8 der Scheibenwischvorrichtung ausgeübt. Das ist in Fig. 4B dargestellt. Durch die Zugkraft 50 wird prinzipiell die gleiche Kettenreaktion ausgeführt, die bereits oben in Verbindung mit Fig. 3B beschrieben wurde.

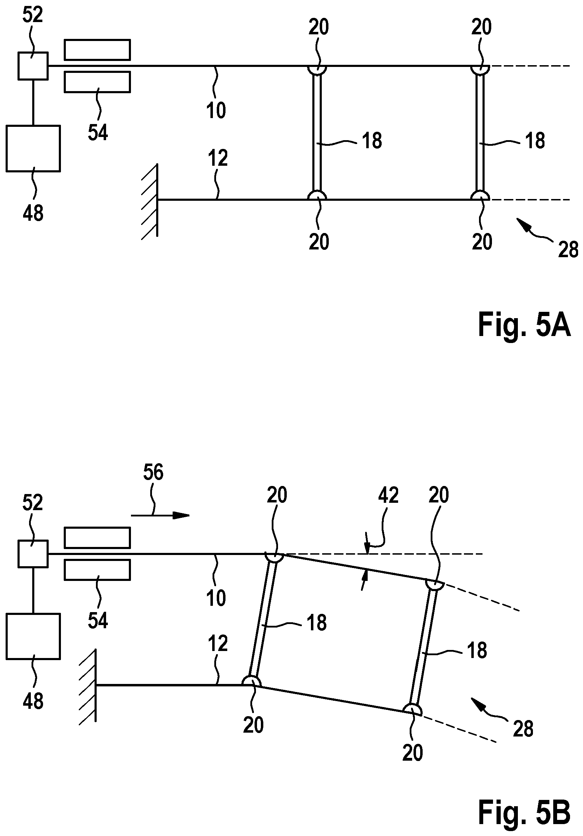

Fig. 5A zeigt eine schematische Darstellung eines Ausführungsbeispiels der erfindungsgemäßen Scheibenwischvorrichtung in einer Grundstellung mit einem Aktuator 52 als Druckerzeugungseinrichtung. Der Aktuator 52 ist mit dem linken Ende des Oberteils 10 verbunden, das in seinem Endbereich durch eine Führung 54 geführt ist. Der Aktuator 52 kann Längenextraktionen ausführen. Dazu ist er mit dem Steuergerät 48 verbunden, das mittels geeigneter elektrischer Signal den Aktuator 52 ansteuert. Bei einer Extraktion des Aktuators 52 wird auf das Oberteil 10 eine Druckkraft 56 in Längserstreckung 8 der Scheibenwischvorrichtung ausgeübt. Das ist in Fig. 5B dargestellt. Durch die Druckkraft 50 werden das Oberteil 10 und das Unterteil 12 nach unten in Richtung der Scheibe gebogen. Die Druckkraft 50 wird über die Verbindungselemente 18 auf das Unterteil 12 übertragen. Es wird prinzipiell die gleiche Kettenreaktion ausgeführt, die bereits oben in Verbindung mit Fig. 3B beschrieben wurde.

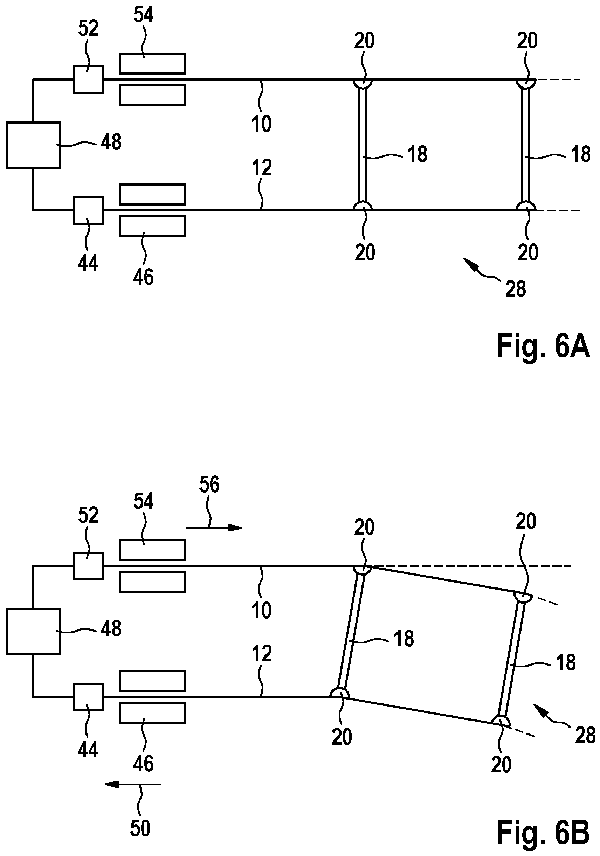

Fig. 6A und 6B zeigen schematische Darstellungen eines Ausführungsbeispiels der Scheibenwischvorrichtung mit dem Aktuator 44 als Zugerzeugungseinrichtung und dem Aktuator 50 als Druckerzeugungseinrichtung. Dieses Ausführungsbeispiel stellt eine Kombination der beiden Ausführungsbeispiele nach Fig. 4A, B und Fig. 5A, B dar.

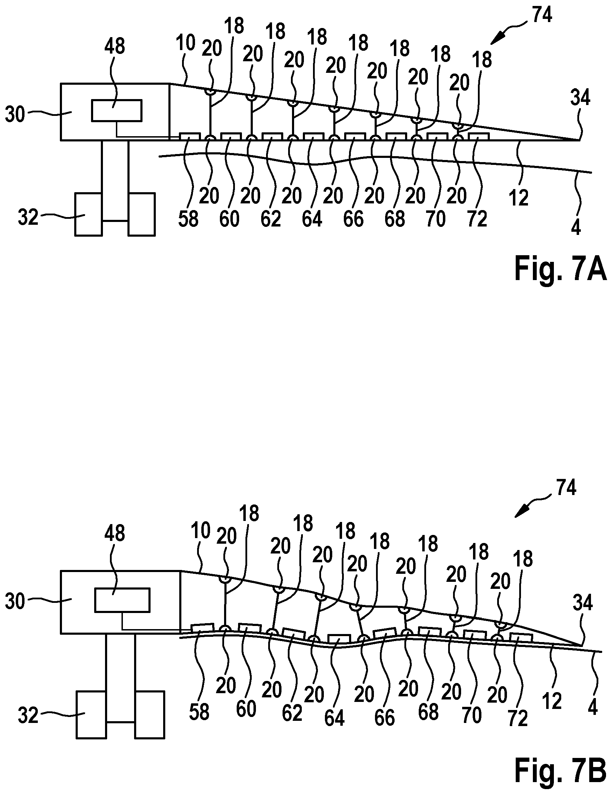

Fig. 7A, B zeigen schematische Darstellungen eines Ausführungsbeispiels der erfindungsgemäßen Scheibenwischvorrichtung mit mehreren Aktuatoren 58 bis 72 als Zug- und Druckerzeugungseinrichtungen. Fig. 7A zeigt die Scheibenwischvorrichtung in der Grundstellung und Fig. 7B in der an die Scheibe 4 angelegten Stellung. Die Scheibenwischvorrichtung enthält ein Wischblatt 74, das mit dem Befestigungsteil 30 verbunden ist. Die Aktuatoren 58-72 sind in dem Unterteil 12 entlang dessen Längserstreckung angeordnet und können Längenkontraktionen oder Längenextraktionen durchführen. Dazu sind sie mit dem Steuergerät 48 verbunden, das die Aktuatoren 58-72 mit geeigneten Ansteuersignalen versorgt. In den Fig. 7A, B sind aus Gründen der Übersichtlichkeit beispielhaft jeweils nur eine Verbindung von dem Steuergerät 48 zu dem ersten Aktuator 58 dargestellt. Der erste Aktuator ist zwischen dem Befestigungsteil 30 und dem ersten Verbindungselement 18 und der letzte Aktuator 72 zwischen dem letzten Verbindungselement 18 und dem Ende des Wischblatts 74, d. h. der äußeren Verbindungsposition 34, angeordnet. Die übrigen Aktuatoren 60-70 befinden sich zwischen benachbarten Verbindungselementen 18. Auf diese Weise ist im Unterteil 12 eines jeden Elements oder Teilbereichs des Wischblatts 74 ein Aktuator 58-72 angeordnet. Die Scheibe 4 hat hier mitunter starke konkave und konvexe Krümmungsbestandteile. In einem konvexen Krümmungsbereich kontrahieren die Aktuatoren 58-72 und in einem konkaven Krümmungsbereich extrahieren die Aktuatoren 58-72. Im Ausführungsbeispiel nach Fig. 7B hat der Aktuator 64 extrahiert, während die übrigen Aktuatoren 58-62, 66-72 kontrahiert haben.

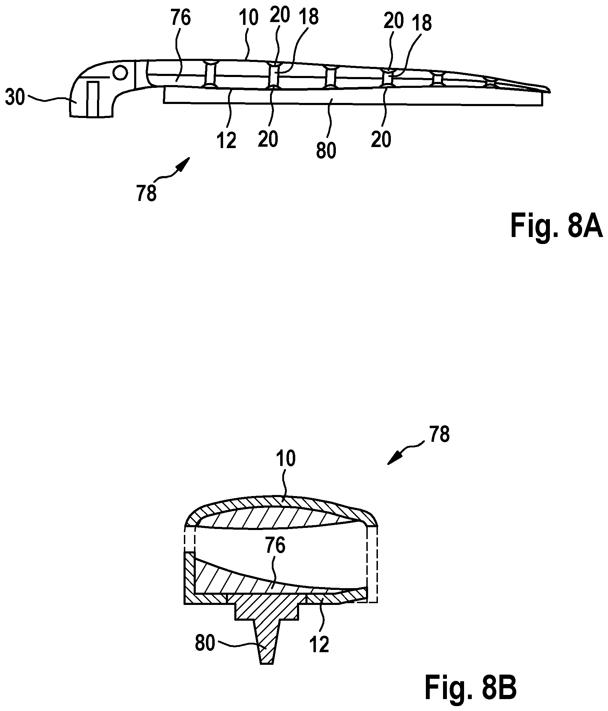

Fig. 8A zeigt eine schematische Darstellung eines Ausführungsbeispiels der erfindungsgemäßen Scheibenwischvorrichtung mit einem integrierten Spoiler 76. Die Scheibenwischvorrichtung weist ein Wischblatt 78 auf, an dessen Unterteil 12 zum Wischen der Scheibe eine Gummilippe 80 angebracht ist. Der Spoiler 76 ist in einen Zwischenraum 82 integriert, der zwischen dem Oberteil 10 und dem Unterteil 12 ausgebildet ist. Der Spoiler 76 dient zum Beeinflussen einer in den Zwischenraum 82 eindringenden Luftströmung. Der Spoiler 76 ist als Schräge realisiert, die an dem Unterteil 12 des Wischblatts 78 ausgebildet ist. Der Spoiler 76 kann beispielsweise aus Gummi hergestellt werden, das um eine geeignete Wischblattstruktur, z. b. aus Blech, gespritzt ist.

Fig. 8B zeigt eine schematische Darstellung eines Querschnitts durch das Wischblatt 78 nach Fig. 8A.

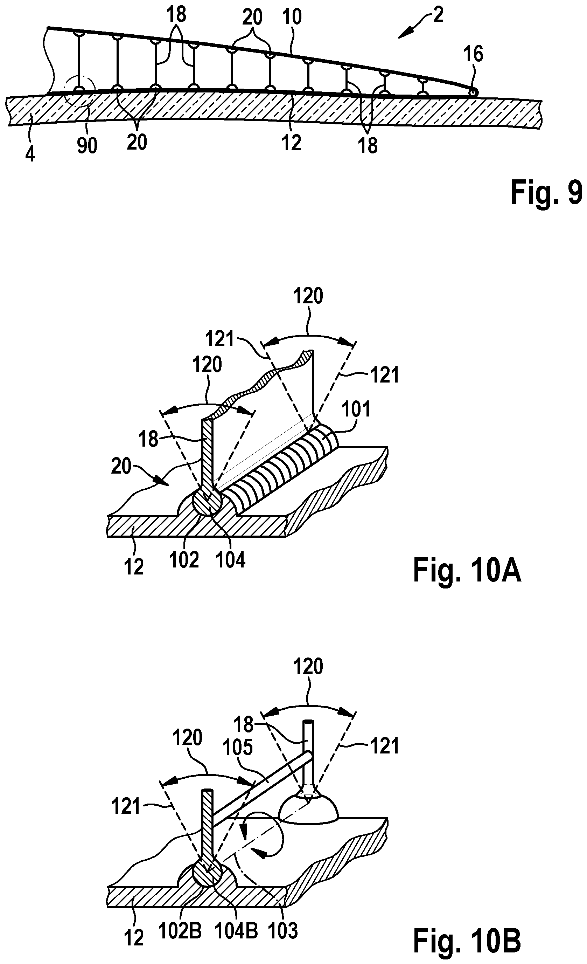

Figur 9 zeigt einen Ausschnitt einer schematischen Darstellung eines Wischblatts 2 einer Scheibenwischvorrichtung. Das Wischblatt 2 dient zum Wischen einer Scheibe 4 eines Fahrzeugs zum Beispiel eines Kraftfahrzeugs, insbesondere eines Pkws. Gemäß Ausführungsformen der vorliegenden Erfindung handelt es sich bei dem Wischblatts um einen Fin-Ray Wischer.

An einem Oberteil 10 und ein Unterteil 12 sind Verbindungselemente 18 angeordnet, die mittels Gelenken 20 mit dem Oberteil und dem Unterteil verbunden sind. Gemäß typischen Ausführungsformen der vorliegenden Erfindung existiert eine Gruppe von Gelenken, die zum Einsatz bei Fin-Ray-Wischern, insbesondere bei Kraftfahrzeugen, in vorteilhafter Weise geeignet sind.

Die folgenden Figuren illustrieren unterschiedliche Varianten dieser Gelenke. Insbesondere stellen Figuren 10 A bis 13 einen in Figur 9 dargestellten Ausschnitt 90 dar. Die Gelenke sind gemäß typischen Ausführungsformen derart ausgestaltet, dass ein Freiheitsgrad existiert. Das heißt, typischerweise sind die Drehgelenke Scharniere.

Figur 10A zeigt eine 1. Gelenkvariante. Es ist das Gelenk gemäß dem in Figur 9 dargestellten Ausschnitt 90 dargestellt. Die anderen Gelenke an dem Unterteil 12 bzw. dem Oberteil 10 des Wischblatts 2 können analog ausgeführt sein. Figur 10A zeigt das Unterteil 12 mit einem Gelenkteil 102, das zylinderförmig bzw. als Hohlzylinder, der mit einem Hinterschnitt versehen ist, zur Verfügung gestellt ist. Das Verbindungselement 18 ist mit einem korrespondierenden Gelenkteil 104 ausgebildet. Das korrespondierende Gelenkteil 104 ist ein am Verbindungselement 18 zur Verfügung gestellter Zylinder oder ein Zylinder, der einstückig mit dem Verbindungselement 18 ausgebildet ist. Auch das Gelenkteil 102, d.h. der Hohlzylinder mit Hinterschnitt kann einstückig mit dem Unterteil 12 des Wischblatts 2 ausgebildet sein.

Das Gelenk 20 führt somit zu einer Beweglichkeit des Verbindungselements 18 im Bereich des Winkels 120. Dies ist ebenfalls durch Hilfslinie 121 dargestellt. Gemäß typischen Ausführungsformen kann sich das Verbindungselement 18 entlang der Drehachse des Zylinders 104 erstrecken. Das Drehgelenkt hat ein erstes Gelenkteil 102 und ein zweites Gelenkteil 104.

Figur 10B zeigt eine weitere Gelenkvariante. Das Drehgelenk für das Verbindungselement bzw. die Verbindungselemente 18 ist durch 2 Kugeln 104B zur Verfügung gestellt. Das am Unterteil 12 angebrachte Gelenkteil 102B bzw. das integral mit dem Unterteil 12 ausgebildete Gelenkteil 102B ist angepasst, um mit einem Hinterschnitt das Gelenkteil 104B, d.h. die Kugel, aufzunehmen. Gemäß typischen Ausführungsformen können ein bzw. 2 Verbindungselemente 18 zur Verfügung gestellt sein. Im dem Fall, dass 2 Verbindungselemente 18 zur Verfügung gestellt sind, werden diese zur Ausbildung einer Achse 103 mit einem Quersteg 105 zwischen den zwei Verbindungselementen miteinander verbunden, um eine Bewegung zu definieren, die durch Winkel 120 und Hilfslinie 121 dargestellt ist. Hierdurch kann die Bewegung im Wesentlichen auf eine Ebene beschränkt werden, die in Figur 9 der Blattebene entspricht.

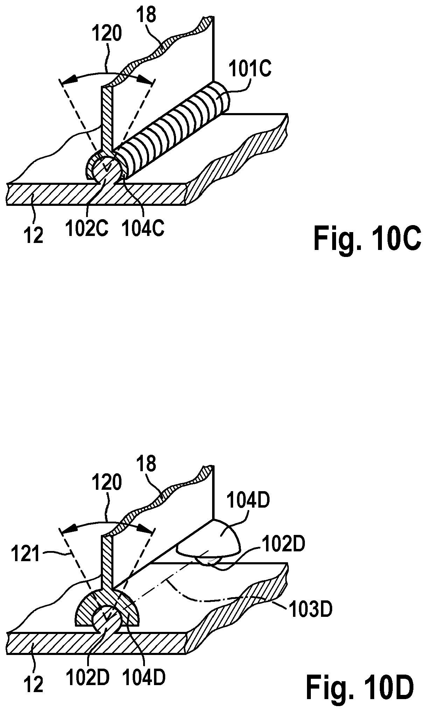

Figur 10 C zeigt eine Variante eines Gelenks, wobei Figur 10 C ähnlich zu Figur 10 A ausgestaltet ist. Im Gegensatz zu Figur 10 A hat die Ausführungsform, die in Figur 10 C dargestellt ist, ein Gelenkteil 102C, das als Zylinder ausgebildet ist, und ein Gelenkteil 104C, das als Hohlzylinder mit Hinterschnitt ausgebildet ist. Wie bereits erläutert, kann das Gelenkteil 100 2C integral mit dem Unterteil 12 des Wischarms 2 ausgebildet sein oder kann am Unterteil 12 angebracht sein. Analog kann das Gelenkteil 100 4C, d.h. der Hohlzylinder mit hinter Schnitt integral mit dem Verbindungselement 18 ausgebildet sein oder kann an diesem angebracht sein.

Figur 10 D ist wiederum analog zu Figur 10 B wobei das Gelenkteil 102C als Kugel ausgebildet ist und das Gelenkteil 104C als Hohlkugel mit Hinterschnitt ausgebildet ist. Die Hohlkugeln können wiederum über eine Achse 103D miteinander verbunden sein.

In den Figuren 10 A bis 10 D können die Verbindungselemente 18 an das Unterteil 12 angeklipst werden. Das Klipsen kann sowohl mit fertigen Einzelteilen erfolgen als auch im noch warmen Zustand der Werkstücke innerhalb eines Werkzeugs zur Herstellung der Werkstücke.

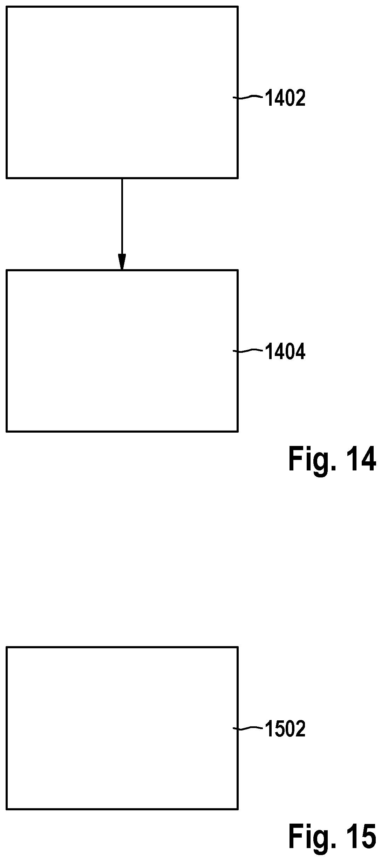

Figur 14 zeigt schematisch ein Ablaufdiagramm zur Illustration von Verfahren zur Herstellung einer Scheinwischvorrichtung, zum Beispiel einer Scheibenwischvorrichtung wie sie im Zusammenhang mit den Figuren 10A bis 10D beschrieben ist. Das Verfahren beinhaltet (siehe Schritt 1402) das Herstellen eins Oberteils, das zumindest teilweise biegbar ausgestaltet ist und erste Gelenkteile aufweist, das Herstellen eines Unterteils, das zumindest teilweise biegbar ausgestaltet ist und erste Gelenkteile aufweist, und das Herstellen mehrere Verbindungselemente zum Verbinden des Oberteils und des Unterteils, wobei die Verbindungselemente jeweils zweite Gelenkteile aufweisen. Das Verfahren beinhaltet (siehe Schritt 1404) Zusammenklipsen der ersten und zweiten Gelenkteile.

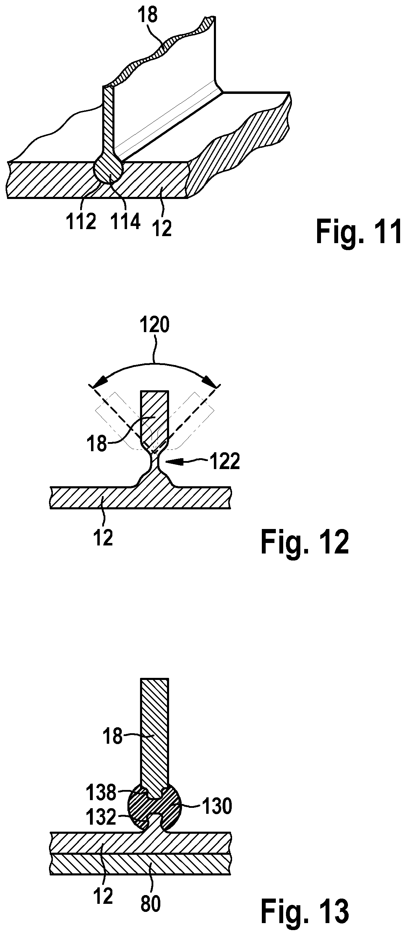

Figur 11 zeigt eine weitere Ausführungsform, bei der ein Gelenk mit einem ersten Gelenkteil 112 und einem zweiten Gelenkteil 114 zur Verfügung gestellt ist. Figur 11 illustriert die Gelenkteile als zylinderförmige Gelenkteile, wie sie zum Beispiel auch in Figur 10 A oder Figur 10 C dargestellt sind. Analog können die Gelenkteile aber auch als Kugeln, analog zu Figur 10 B oder Figur 10 D, ausgebildet sein. Gemäß der mittels Figur 11 illustrierten Ausführungsformen wird ein werkzeugfallendes Gelenk gebildet, indem eines der Gelenkteile aus einem ersten Material gespritzt wird, das mehr schwindet als die umgebende Schale des anderen Gelenkteils. Zum Beispiel kann das Gelenkteil 114, das am Verbindungselement 18 ausgebildet ist, aus POM gespritzt werden und das Gelenkteil 112, das am Unterteil 12 ausgebildet ist, aus PA gespritzt werden. Hierdurch ergibt sich beim Erkalten des Werkstücks ein entsprechendes Gelenk. Gemäß Ausführungsformen der Erfindung kann das Gelenk somit auch durch ein 2K-Spritzverfahren (2 Komponenten Spritzverfahren) hergestellt werden.

Figuren 14 und 15 zeigen schematisch Ablaufdiagramme zur Illustration von Verfahren zur Herstellung einer Scheibenwischvorrichtung. Dabei können Figuren 14 und 15 auch zur Illustration eines Herstellungsverfahrens einer Vorrichtung, wie sie in Bezug auf FIG. 11 beschrieben ist, verwendet werden. In Figur 15 zeigt Schritt 1502 ein Ein-Schrittverfahren, wie es zum Beispiel oben als 2K-Spritzverfahren beschrieben ist. Figur 14 dient zur Illustration einer weiteren Abwandlung. Das Verfahren beinhaltet (siehe Schritt 1402) das Herstellen eins Oberteils, das zumindest teilweise biegbar ausgestaltet ist und erste Gelenkteile aufweist, das Herstellen eines Unterteils, das zumindest teilweise biegbar ausgestaltet ist und erste Gelenkteile aufweist, und das Herstellen mehrere Verbindungselemente zum Verbinden des Oberteils und des Unterteils, wobei die Verbindungselemente jeweils zweite Gelenkteile aufweisen. Das Verfahren beinhaltet (siehe Schritt 1404) das Aufbiegen von Oberteil und/oder Unterteil, so dass die Öffnungen der Hohlzylinder 112 im Bereich des Hinterschnitts vergrößert werden. Somit können die Verbindungselement 18 eingefügt werden worauf die Biegung des Oberteils bzw. Unterteils reduziert wird, so dass der Hinterschnitt den Zylinder 114 umgreift. Auf diese Weise können von einem Ende des Wischblatts zum gegenüberliegenden Ende des Wischblatts eine Mehrzahl von Verbindungselement eingefügt werden. Insbesondere kann dies sowohl mit dem Oberteil als auch mit dem Unterteil durchgeführt werden, um einen Zusammenbau der Scheibenwischvorrichtung herbeizuführen.

Gemäß typischen Ausführungsformen der vorliegenden Erfindung, die mit anderen Ausführungsformen kombiniert werden können, handelt es sich bei dem Gelenk (siehe Referenzzeichen 20 in Figur 9) bzw. dem Drehgelenk 20 um ein Scharnier. D.h. es werden 2 Ebenen drehbar miteinander verbunden. In anderen Worten, ein Drehgelenk oder ein Lager mit einem Freiheitsgrad wird zur Verfügung gestellt.

Bei den Drehgelenken gemäß der Figuren 10 A bis 10D, d.h. bei Gelenken oder Scharnieren, die zweiteilig ausgebildet sind, kann insbesondere ein gutes Kriechverhalten, z.B. eine hohe Kriechbeständigkeit zur Verfügung gestellt werden. Die Materialien können derart gewählt werden, dass insbesondere bei hohen Temperaturen keine dauerhafte Verformung der Gelenke existiert. Dadurch kann eine verbesserte Langlebigkeit des Wischblatts 2 zur Verfügung gestellt werden. Insbesondere für zweiteilige Gelenke, die nicht mit einem 2K-Spritzverfahren hergestellt sind, kann der Zylinder oder die Kugel bzw. der Hohlzylinder oder die Hohlkugel, jeweils mit hinter Schnitt, aus demselben Material gefertigt werden. Temperaturschwankungen beeinträchtigen somit die Funktion des Gelenks in einem sehr geringen Ausmaß.

Obwohl die zweiteilige Ausführung des Gelenks gegebenenfalls mit leicht erhöhten Herstellungskosten in Verbindung steht (die Gelenke müssen geklipst werden), kann dies insbesondere für komplexere Anwendungsgebiete bzw. Anwendungen mit höheren Anforderungen eine vorteilhafte Ausführungsform darstellen. Zum Beispiel bestehen höhere Anforderungen für Frontscheiben-Wischer im Gegensatz zu Heckscheiben-Wischer.

Obwohl die Figuren 10 A bis 11 jeweils lediglich einen Ausschnitt des Unterteils 12 mit einem entsprechenden Gelenk 20 darstellen, ist gemäß Ausführungsformen von Wischblättern ein entsprechendes Gelenk ebenfalls an anderen Positionen des Unterteils 12 sowie an den Positionen des Oberteils 10 zur Verfügung gestellt. Gemäß noch weiteren Ausführungsformen, die mit anderen Ausführungsformen kombiniert werden können, können mehrere der in dieser Offenbarung beschriebenen Gelenkvarianten miteinander zur Ausgestaltung an einem Wischblatts zur Verfügung gestellt werden. Zum Beispiel kann ein Gelenk gemäß einer Ausführungsform in einem ersten Bereich der Längserstreckung des Wischblatts verwendet werden, während in einem zweiten Bereich der Längserstreckung des Wischblatts ein Gelenk gemäß einer anderen Ausführungsform verwendet wird.

Figur 12 zeigt eine weitere Ausführungsform eines Gelenks 20. Ein Filmscharnier 122 ist zwischen dem Unterteil 12 und dem Verbindungselement 18 zur Verfügung gestellt. Hierdurch kann eine Bewegung mit einem Freiheitsgrad, wie sie durch Winkel 120 dargestellt ist, zur Verfügung gestellt werden. Gemäß typischen Ausführungsformen, die mit anderen Ausführungsformen kombiniert werden können, kann das Wischblatts mit den Komponenten Unterteil 12, Oberteil 10, Verbindungselementen 18, und einer Mehrzahl von Scharnieren bzw. Gelenken 20 einteilige ausgebildet werden. Zum Beispiel können alle Gelenke 20 einteilige mit dem Unterteil 12 und dem Oberteil 10 ausgebildet werden. Dies kann zum Beispiel durch ein Spritzgussverfahren erfolgen.

Ausführungsformen, bei denen das Gelenk durch ein Filmscharnier zur Verfügung gestellt ist, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden.

Ausführungsformen der vorliegenden Erfindung haben im Gelenk bzw. Scharnier eine Biegesteifigkeit von 75 Nmm/rad oder kleiner, zum Beispiel von 15 bis 35Nmm/rad. Bei den zweiteilig ausgestalteten Gelenken (siehe zum Beispiel Figuren 10 A bis 11) kann dies in besonders günstiger Weise zur Verfügung gestellt werden. Für die im Zusammenhang mit Figur 12 beschriebenen Ausführungsformen, d.h. für Filmscharniere, muss eine geeignete Materialwahl in Kombination mit einer geeigneten Formgebung zur Verfügung gestellt werden. Hierbei ist zu berücksichtigen, dass ein besonders dünnes Filmscharnier durch das Kriechverhalten des Materials zu einer dauerhaften Verformung führen kann, die die Funktion des Filmscharniers beeinträchtigt. Zum Beispiel kann bei sehr hohen Temperaturen, die über einen bestimmten Zeitraum einwirken, das Material "davon fließen", so dass die Funktion des Scharniers dauerhaft verändert bzw. verschlechtert wird. Ferner muss das Filmscharnier eine Biegesteifigkeit in einem gewissen Wertebereich aufweisen. Letztlich müssen die Dimensionen des Werkstoffs derart ausgestaltet sein, dass ein Herstellungsverfahren, wie zum Beispiel ein Spritzgussverfahren, günstig eingesetzt werden kann. Zum Beispiel können sehr dünne Bereiche oder Bereiche eines Werkstücks, die hinter einem sehr dünnen Bereich angeordnet sind, in einem Spritzgussverfahren nicht ausreichend gefüllt werden. Auch hierdurch werden die Dimensionen des Werkstücks limitiert.

Gemäß Ausführungsformen, die mit anderen Ausführungsformen kombiniert werden können, kann das Material, aus dem ein Wischblatt mit Oberteil, Unterteil und Filmscharnier zur Verfügung gestellt wird ein Elastizitätsmodul von 300 bis 1600 MPa haben. Bevorzugt ist ein Elastizitätsmodul von 1000 MPa oder kleiner. Bei kleineren Elastizitätsmodulen ist jedoch zu berücksichtigen das gute Kriecheigenschaften, d.h. ein geringes Kriechen des Materials, gewährleistet ist.

Gemäß weiteren typischen Ausführungsformen, die mit anderen Ausführungsformen kombiniert werden können, kann ein Filmscharnier, insbesondere ein mit dem Verbindungselement 18 einteilig ausgestaltetes Filmscharnier, derart zur Verfügung gestellt werden, dass die Breite des Verbindungselements 18 außerhalb des Scharnierbereichs von 1 mm bis 3 mm, zum Beispiel 1,5 mm ist, und die Breite im Bereich des Filmscharnier von 0,1 mm bis 0,8 mm, zum Beispiel 0,3 mm ist.

Gemäß weiteren typischen Ausführungsformen, kann am Unterteil 12 des in Figur 9 dargestellten Wischblatts 2 eine Wischlippe zur Verfügung gestellt werden. Die Wischlippe wischt über die Scheibe des Fahrzeugs, um diese zu reinigen. Bei werkzeugfallenden Wischblättern, wie Sie zum Beispiel in Bezug auf Figur 12 beschrieben sind, kann dies in einer bevorzugten Ausführungsform einteilig zur Verfügung gestellt werden.

Zum Beispiel kann die Lippe aus demselben Material wie das Wischblatt bestehen. Die Lippe kann aus einem anderen Material bestehen, wobei ein 2-Komponenten Spritzverfahren verwendet wird. Oder die Lippe kann durch explodieren zur Verfügung gestellt werden. Alternativ kann an dem Unterteil des Wischblatts 12 eine Aufnahme zur Verfügung gestellt werden, so dass die Wischlippe eingefädelt werden kann. Dies bietet den Vorteil, dass zum Wechsel des Wischblatts lediglich die Wischlippe ausgetauscht werden muss und somit eine Materialeinsparung möglich ist.

Figur 15 zeigt schematisch ein Ablaufdiagramm zur Illustration von Verfahren zur Herstellung einer Scheinwischvorrichtung, zum Beispiel mit einem Filmscharnier. Zum Beispiel wird in Schritt 1502 ein einstückig ausgebildetes Wischblatt mit einem Oberteil, das zumindest teilweise biegbar ausgestaltet ist, einem Unterteil, das zumindest teilweise biegbar ausgestaltet ist, und mehrere Verbindungselementen, wobei die Verbindungselemente entlang einer Längserstreckung der Scheibenwischvorrichtung voneinander beabstandet sind, hergestellt. Dies kann zum Beispiel durch ein Spritzgussverfahren erfolgen.

Eine weitere Ausgestaltung, um eine Wischlippe und ein Wischblatt günstig und ökonomisch herzustellen ist in Figur 13 dargestellt. Hierbei wird das Unterteil 12, bzw. für das gesamte Wischblatt 2 ebenfalls das Oberteil 10, sowie die Verbindungselemente 18 aus einem ersten Material hergestellt. Typischerweise kann dies dasselbe Material sein oder es können für die einzelnen Komponenten auch unterschiedliche Materialien gewählt werden. Diese Materialien können aus einer Gruppe bestehend aus: TPE (Thermoplastischem Elastomer) TPE-S, TPE-O, TPE-U, und TPE-A ausgewählt werden, wobei günstig zu erwerben der oder günstig herzustellende Materialien verwendet werden können.

Die Wischlippe 80 und das Gelenk 130 können aus einem anderen Material hergestellt werden, das den erhöhten Anforderungen in Bezug auf Biegesteifigkeit, Kriechbeständigkeit, oder anderen Anforderungen genügt. Da bei einer solchen Ausführungsform eines Gelenks für einen Wischblatt bzw. eine Wischlippe für ein Wischblatt lediglich ein begrenzter Materialbedarf für das Gelenk und die Wischlippe besteht, können hochwertigere (und teurere) Materialien verwendet werden, ohne die Gesamtkosten des Wischblatts über die Maßen zu erhöhen.

Es können eine steife bzw. relativ steife Rippe bzw. ein steifes Verbindungselement, das Unterteil und das Oberteil aus einem Kunststoff ausgestaltet werden. Dieser kann zum Beispiel ein Faser verstärkte Kunststoff sein. Das Gelenk 130 und das Gummiprofil der Wischlippe 80 werden aus einem gummiartigen Material hergestellt. Die beiden unterschiedlichen Materialien können zum Beispiel in einem 2-Komponenten-Spritzverfahren zur Verfügung gestellt werden. Gemäß typischen Ausführungsformen kann als gummiartiges Material ein thermoplastisches Elastomer (TPE) verwendet werden. Typische Materialien können ausgewählt werden aus der Gruppe bestehend aus: TPE (Thermoplastischem Elastomer) TPE-S, TPE-O, TPE-U, und TPE-A.

Das Gelenk 130 wird durch Vorsprünge 132 im Unterteil 12 (oder Oberteil 10) und Vorsprünge 138 in den Verbindungselementen auf beiden Seiten verbunden. Das Gelenk 30, das durch seine Elastizität die entsprechend geringe Biegesteifigkeit zur Verfügung stellt, beinhaltet entsprechende Vertiefungen, typischerweise mit Hinterschnitt, zur Aufnahme der Vorsprünge. Alternativ können Vertiefungen auch im Verbindungselement, im Unterteil, oder beidem sein, wobei dann entsprechende Vorsprünge im Gelenk vorhanden sind.

Optional kann das TPE-Gelenk unabhängig vom Wischgummiprofil, das heißt der Wischlippe, zur Verfügung gestellt werden. Im gleichen Spritzwerkzeug kann jedoch auch das Gummiprofil der Wischlippe und/oder zum Beispiel auch ein Styling der Oberfläche hergestellt werden. Durch eine solche Reduzierung der Spritzwerkzeuge können die Herstellungskosten reduziert werden.

Gemäß den hier beschriebenen Ausführungsformen können Fin-Ray Wischer für Fahrzeugscheiben auf besonders günstige Weise und/oder für eine Mehrzahl unterschiedlicher Einsatzgebiete hergestellt werden. Es werden Gelenke bzw. Drehgelenke mit einer geeigneten Biegesteifigkeit zur Verfügung gestellt, die den Verwendungsbedingungen Rechnung tragen.

## Patentansprüche

1. Scheibenwischvorrichtung (2; 28, 30; 74; 78) nach dem Flossenstrahl-Prinzip für ein Fahrzeug, insbesondere ein Kraftfahrzeug, mit
- einem langgestreckten Oberteil (10), das zumindest teilweise biegbar ausgestaltet ist,
- einem langgestreckten Unterteil (12), das zumindest teilweise biegbar ausgestaltet ist, und
- mehreren Verbindungselementen (18) zum Verbinden des Oberteils (10) und des Unterteils (12), wobei die Verbindungselemente (18) entlang einer Längserstreckung (8) der Scheibenwischvorrichtung (2; 28, 30; 74; 78) voneinander beabstandet und mittels Drehgelenken (20; 130; 122) an dem Unterteil (12) befestigt sind
- wobei die Drehgelenke Filmscharniere (122) sind, die eine Dicke von 0,1 mm bis 0,8 mm, insbesondere 0,2 bis 0,4 mm haben.

2. Scheibenwischvorrichtung nach Anspruch 1, **dadurch gekennzeichnet, dass** das Oberteil (10) und das Unterteil (12), insbesondere in einem Endbereich der Scheibenwischvorrichtung (2; 28, 30; 74; 78), an einer äußeren Verbindungsposition (14, 16; 34) fest miteinander verbunden sind, wobei die äußere Verbindungsposition (14, 16; 34) insbesondere in eine in Längserstreckung (8) der Scheibenwischvorrichtung (2; 28, 30; 74; 78) von außen nach innen weisende Richtung betrachtet, vor den Verbindungselementen (18) ausgebildet ist.

3. Scheibenwischvorrichtung nach Anspruch 1 oder 2, **dadurch gekennzeichnet, dass** die Längsachsen (24) der Verbindungselemente (18) in Winkeln (26) zum Unterteil (12) verlaufen, die zwischen 65° und 115°, insbesondere zwischen 75° und 105°, liegen.

4. Scheibenwischvorrichtung nach einem der Ansprüche 1 bis 3, **dadurch gekennzeichnet, dass** ein Abstand (22) zwischen jeweils zwei benachbarten Verbindungselementen (18) kleiner als 50 mm, insbesondere kleiner als 30 mm, ist.

5. Scheibenwischvorrichtung nach einem der Ansprüche 1 bis 4, **dadurch gekennzeichnet, dass** das Oberteil (10) ein- oder zweiteilig ausgebildet ist.

6. Scheibenwischvorrichtung nach einem der Ansprüche 1 bis 5, **dadurch gekennzeichnet, dass** eine biegbare Scheibenwischerlippe (80) an einer Seite des Unterteils (12) angebracht ist, die dem Oberteil (10) abgewandt ist.

7. Scheibenwischvorrichtung nach einem der Ansprüche 1 bis 6, **dadurch gekennzeichnet, dass** das Unterteil (12) mit einer Zugerzeugungseinrichtung (44) zum Erzeugen einer auf das Unterteil (12), insbesondere in Richtung der Längserstreckung des Unterteils (12), wirkenden Zugkraft (50) verbunden ist.

8. Scheibenwischvorrichtung nach einem der Ansprüche 1 bis 7, **dadurch gekennzeichnet, dass** das Oberteil (10) mit einer Druckerzeugungseinrichtung (52) zum Erzeugen einer auf das Oberteil (10), insbesondere in Richtung der Längserstreckung des Oberteils (10), wirkenden Druckkraft (56) verbunden ist.

9. Scheibenwischvorrichtung nach einem der Ansprüche 1 bis 8, **dadurch gekennzeichnet, dass** mehrere Aktuatoren (58-72) zum Erzeugen von Längenkontraktionen und Längenextraktionen vorhanden sind, die in dem Unterteil (12) entlang dessen Längserstreckung angeordnet sind.

10. Scheibenwischvorrichtung nach einem der Ansprüche 1 bis 9, **dadurch gekennzeichnet, dass** zwischen dem Oberteil (10) und dem Unterteil (12) ein Zwischenraum (82) ausgebildet ist, in dem ein Spoiler (76) zum Beeinflussen einer in den Zwischenraum (82) eindringenden Luftströmung angeordnet ist.

11. Scheibenwischvorrichtung nach einem der Ansprüche 1 bis 10, wobei die Drehgelenke (20; 130; 122) eine Biegesteifigkeit von 75Nmm/rad oder kleiner haben.

12. Scheibenwischvorrichtung nach einem der Ansprüche 1 bis 11, wobei die Verbindungselement mittels weiteren Drehgelenken (20; 130; 122) an dem Oberteil befestigt sind.

13. Scheibenwischvorrichtung nach Anspruch 1, wobei die Filmscharniere einteilig mit dem Verbindungselement (18) und/oder dem Unterteil (12) ausgebildet sind.

14. Scheibenwischvorrichtung nach einem der Ansprüche 1 bis 13, wobei die Filmscharniere aus einem Material aus der Gruppe bestehend aus: POM, PA, und TPE, sind.

## Claims

1. Windscreen wiper device (2; 28, 30; 74; 78) according to the fin ray principle for a vehicle, in particular a motor vehicle, having
- an elongate upper part (10), which is configured to be at least partially bendable,
- an elongate lower part (12), which is configured to be at least partially bendable, and
- a plurality of connecting elements (18) for connecting the upper part (10) and the lower part (12), wherein the connecting elements (18) are spaced apart from one another along a longitudinal extent (8) of the windscreen wiper device (2; 28, 30; 74; 78) and are fastened to the lower part (12) by means of rotary joints (20; 130; 122),
- wherein the rotary joints are film hinges (122) which have a thickness of 0.1 mm to 0.8 mm, in particular 0.2 to 0.4 mm.

2. Windscreen wiper device according to Claim 1, **characterized in that** the upper part (10) and the lower part (12) are fixedly connected to each other at an outer connecting position (14, 16; 34), in particular in an end region of the windscreen wiper device (2; 28, 30; 74; 78), wherein the outer connecting position (14, 16; 34) is formed in front of the connecting elements (18), in particular as viewed in a direction pointing from the outside inwards in the longitudinal extent (8) of the windscreen wiper device (2; 28, 30; 74; 78).

3. Windscreen wiper device according to Claim 1 or 2, **characterized in that** the longitudinal axis (24) of the connecting elements (18) run at angles (26) with respect to the lower part (12), said angles being between 65° and 115°, in particular between 75° and 105°.

4. Windscreen wiper device according to one of Claims 1 to 3, **characterized in that** a distance (22) between in each case two adjacent connecting elements (18) is smaller than 50 mm, in particular smaller than 30 mm.

5. Windscreen wiper device according to one of Claims 1 to 4, **characterized in that** the upper part (10) is formed in one or two parts.

6. Windscreen wiper device according to one of Claims 1 to 5, **characterized in that** a bendable windscreen wiper lip (80) is attached to a side of the lower part (12) that faces away from the upper part (10).

7. Windscreen wiper device according to one of Claims 1 to 6, **characterized in that** the lower part (12) is connected to a tension-generating device (44) for generating a tensile force (50) acting on the lower part (12), in particular in the direction of the longitudinal extent of the lower part (12).

8. Windscreen wiper device according to one of Claims 1 to 7, **characterized in that** the upper part (10) is connected to a pressure-generating device (52) for generating a compressive force (56) acting on the upper part (10), in particular in the direction of the longitudinal extent of the upper part (10).

9. Windscreen wiper device according to one of Claims 1 to 8, **characterized in that** there are a plurality of actuators (58-72) for producing length contractions and length extractions, which actuators are arranged in the lower part (12) along the longitudinal extent thereof.

10. Windscreen wiper device according to one of Claims 1 to 9, **characterized in that** an intermediate space (82) is formed between the upper part (10) and the lower part (12), in which intermediate space a spoiler (76) for influencing an airflow penetrating the intermediate space (82) is arranged.

11. Windscreen wiper device according to one of Claims 1 to 10, wherein the rotary joints (20; 130; 122) have a flexural rigidity of 75 Nmm/rad or smaller.

12. Windscreen wiper device according to one of Claims 1 to 11, wherein the connecting elements are fastened to the upper part by means of further rotary joints (20; 130; 122).

13. Windscreen wiper device according to Claim 1, wherein the film hinges are formed integrally with the connecting element (18) and/or with the lower part (12).

14. Windscreen wiper device according to one of Claims 1 to 13, wherein the film hinges are made from a material from the group consisting of: POM, PA and TPE.

## Revendications

1. Dispositif d'essuie-glace (2 ; 28, 30 ; 74 ; 78) selon le principe des rayons de nageoires pour un véhicule, en particulier un véhicule automobile, comprenant
- une partie supérieure allongée (10) qui est configurée sous forme au moins en partie flexible,
- une partie inférieure allongée (12) qui est configurée sous forme au moins en partie flexible, et
- plusieurs éléments de liaison (18) pour relier la partie supérieure (10) et la partie inférieure (12), les éléments de liaison (18) étant espacés les uns des autres le long d'une étendue longitudinale (8) du dispositif d'essuie-glace (2 ; 28, 30 ; 74 ; 78) et étant fixés au moyen d'articulations pivotantes (20 ; 130 ; 122) à la partie inférieure (12),
- les articulations pivotantes étant des charnières à film (122) qui présentent une épaisseur de 0,1 mm à 0,8 mm, en particulier de 0,2 à 0,4 mm.

2. Dispositif d'essuie-glace selon la revendication 1, **caractérisé en ce que** la partie supérieure (10) et la partie inférieure (12), en particulier dans une région d'extrémité du dispositif d'essuie-glace (2 ; 28, 30 ; 74 ; 78), sont connectées fixement l'une à l'autre au niveau d'une position de liaison extérieure (14, 16 ; 34), la position de liaison extérieure (14, 16 ; 34) étant réalisée avant les éléments de liaison (18), notamment vu dans une direction allant de l'extérieur vers l'intérieur dans une étendue longitudinale (8) du dispositif d'essuie-glace (2 ; 28, 30 ; 74 ; 78).

3. Dispositif d'essuie-glace selon la revendication 1 ou 2, **caractérisé en ce que** les axes longitudinaux (24) des éléments de liaison (18) s'étendent suivant des angles (26) par rapport à la partie inférieure (12) qui sont compris entre 65° et 115°, en particulier entre 75° et 105°.

4. Dispositif d'essuie-glace selon l'une quelconque des revendications 1 à 3, **caractérisé en ce qu'**une distance (22) entre à chaque fois deux éléments de liaison adjacents (18) est inférieure à 50 mm, en particulier inférieure à 30 mm.

5. Dispositif d'essuie-glace selon l'une quelconque des revendications 1 à 4, **caractérisé en ce que** la partie supérieure (10) est réalisée en une ou deux parties.

6. Dispositif d'essuie-glace selon l'une quelconque des revendications 1 à 5, **caractérisé en ce qu'**une lèvre de balai d'essuie-glace flexible (80) est montée sur un côté de la partie inférieure (12) qui est opposé à la partie supérieure (10).

7. Dispositif d'essuie-glace selon l'une quelconque des revendications 1 à 6, **caractérisé en ce que** la partie inférieure (12) est connectée à un dispositif de génération de traction (44) pour générer une force de traction (50) agissant sur la partie inférieure (12), en particulier dans la direction de l'étendue longitudinale de la partie inférieure (12) .

8. Dispositif d'essuie-glace selon l'une quelconque des revendications 1 à 7, **caractérisé en ce que** la partie supérieure (10) est connectée à un dispositif de génération de pression (52) pour générer une force de pression (56) agissant sur la partie supérieure (10), en particulier dans la direction de l'étendue longitudinale de la partie supérieure (10).

9. Dispositif d'essuie-glace selon l'une quelconque des revendications 1 à 8, **caractérisé en ce que** plusieurs actionneurs (58-72) sont prévus pour générer des contractions en longueur et des extractions en longueur, lesquels actionneurs sont disposés dans la partie inférieure (12) le long de son étendue longitudinale.

10. Dispositif d'essuie-glace selon l'une quelconque des revendications 1 à 9, **caractérisé en ce qu'**entre la partie supérieure (10) et la partie inférieure (12) est réalisé un espace intermédiaire (82) dans lequel est disposé un déflecteur (76) pour influencer un écoulement d'air entrant dans l'espace intermédiaire (82).

11. Dispositif d'essuie-glace selon l'une quelconque des revendications 1 à 10, dans lequel les articulations pivotantes (20 ; 130 ; 122) présentent une rigidité en flexion de 75 Nmm/rad ou moins.

12. Dispositif d'essuie-glace selon l'une quelconque des revendications 1 à 11, dans lequel les éléments de liaison sont fixés à la partie supérieure au moyen d'articulations pivotantes supplémentaires (20 ; 130 ; 122).

13. Dispositif d'essuie-glace selon la revendication 1, dans laquelle les charnières à film sont réalisées d'une seule pièce avec l'élément de liaison (18) et/ou avec la partie inférieure (12).

14. Dispositif d'essuie-glace selon l'une quelconque des revendications 1 à 13, dans lequel les charnières à film sont en un matériau du groupe constitué de POM, PA et TPE.
